# EUROPÄISCHE PATENTANMELDUNG

(11) **EP 4 494 532 A1**
(43) Veröffentlichungstag der Anmeldung: **22.01.2025**
(21) Anmeldenummer: 24184851.4
(22) Anmeldetag: 27.06.2024
(51) Int. Cl.: A47J 31/60, A47J 31/44

(54) **VORRATSBEHÄLTER FÜR REINIGUNGSMITTEL UND KAFFEEAUTOMAT**

(30) Priorität: 21.07.2023 DE 102023206940
(71) Anmelder: BSH Hausgeräte GmbH, 81739 München (DE)
(72) Erfinder: Mies, Maximilian, 83253 Rimsting (DE); Steffl, Michael, 83250 Marquartstein (DE)

(57) **Zusammenfassung**

Die Erfindung betrifft einen Vorratsbehälter (1) für Reinigungsmittel, mit einem Gehäuse (2) und mit einem Anschluss (3) für eine Verbindung mit einer Reinigungsvorrichtung (4) eines Strömungsleitungssystems eines Kaffeeautomaten (5), wobei das Gehäuse (2) eine Stirnseite (21) aufweiset und wobei der Anschluss (3) an einer der Stirnseite (21) gegenüberliegenden Rückseite (22) des Gehäuses (2) angeordnet ist.

Die Erfindung betrifft auch Kaffeeautomaten (5) mit einem Strömungsleitungssystem und einer Reinigungsvorrichtung (4), wobei die Reinigungsvorrichtung (4) mindestens einen derartigen Vorratsbehälter (1) aufweist.

## Beschreibung

Die vorliegende Erfindung betrifft einen Vorratsbehälter für Reinigungsmittel, mit einem Gehäuse und mit einem Anschluss für eine Verbindung mit einer Reinigungsvorrichtung eines Strömungsleitungssystems eines Kaffeeautomaten. Die vorliegende Erfindung betrifft auch einen Kaffeeautomaten mit einem derartigen Vorratsbehälter für Reinigungsmittel.

Vorratsbehälter für Reinigungsmittel und Kaffeeautomaten mit solchen Vorratsbehältern sind z. B. aus der WO 2013 023 963 A1 und der EP 2 705 784 A1 bekannt. Derartige Vorratsbehälter enthalten regelmäßig Reinigungsmittel und sind zu einer Verbindung mit einer Reinigungsvorrichtung eines Strömungsleitungssystems eines Kaffeeautomaten eingerichtet. Diese Vorratsbehälter sind z.B. nach dem Aufbrauchen des Reinigungsmittels zum Nachfüllen oder Austauschen entnehmbar ausgebildet. Für die lösbare Verbindung mit der Reinigungsvorrichtung weisen diese bekannten Vorratsbehälter einen Bajonettverschluss auf.

Nachteilig bei diesen bekannten Vorratsbehältern für Reinigungsmittel ist es, dass die Handhabung für technisch weniger versierte Bedienpersonen nicht intuitiv ist und insbesondere eine Drehrichtung zum Lösen der Bajonettverbindung, und ggf. auch zum Herstellen der Bajonettverbindung, nicht erkennbar ist. Insbesondere ist die Art der Verbindung im verbundenen Zustand und die zum Lösen der Bajonettverbindung nötige Drehrichtung nicht intuitiv oder überhaupt nicht erkennbar.

Die Aufgabe der vorliegenden Erfindung ist es daher, einen Vorratsbehälter für Reinigungsmittel bzw. einen Kaffeeautomaten mit derartigem Vorratsbehälter weiter zu verbessern, insbesondere die Handhabung des Vorratsbehälters zu erleichtern.

Diese Aufgabe wird durch einen Vorratsbehälter für Reinigungsmittel mit den Merkmalen des Anspruchs 1 gelöst sowie auch durch einen Kaffeeautomaten mit den Merkmalen des Anspruchs 10. Vorteilhafte Weiterbildungen der Erfindung sind Gegenstand der abhängigen Ansprüche.

Ein dementsprechender Vorratsbehälter für Reinigungsmittel weist ein Gehäuse und einen Anschluss für eine Verbindung mit einer Reinigungsvorrichtung eines Strömungsleitungssystems eines Kaffeeautomaten auf. Das Gehäuse weist eine Stirnseite auf, wobei der Anschluss an einer Rückseite des Gehäuses angeordnet ist, die der Stirnseite gegenüberliegt. Erfindungsgemäß ist die Stirnseite durch zumindest drei Kanten begrenzt, wobei zwei sich entlang der Stirnseite gegenüberliegende der Kanten zueinander parallel verlaufen. Alternativ oder zusätzlich verlaufen mindestens zwei der Kanten, die die Stirnseite begrenzen, zueinander in einen Winkel von kleiner/gleich 90°. Dadurch ist auch für technisch weniger versierte Bedienpersonen intuitiv erkennbar, dass eine Drehbewegung oder eine Drehrichtung zum Lösen der Vorratsbehälter nicht erforderlich ist. Durch die Anordnung der Kanten der Stirnseite kann eine Bedienperson den Vorratsbehälter 1 intuitiv an einemm Griffbereich angreifen, erkennt dabei jedoch sofort, dass der Vorratsbehälter nicht durch eine Drehbewegung zu entnehmen ist. Vielmehr verbleibt als einzige intuitive Bewegung eine translatorische Bewegung, z.B. ein Ziehen, ggf. mit einer zusätzlichen Richtungskomponente, gerichtet nach oben oder unten. Somit wird eine intuitive und insbesondere erleichterte Handhabung ermöglicht. Die erfindungsgemäße Anordnung der Kanten ermöglicht, z.B. durch einen von einem Haltemittel weg größer werdenden Abstand der Kanten, und durch die genannten Winkel zusätzlich unterstützt, dass eine Bedienperson zum Lösen der Verbindung intuitiv zu einer Bewegungsrichtung gelangt, die noch mehr in Richtung einer Löserichtung des Haltemittels wirkt. Dadurch wird die Handhabung des Vorratsbehälters weiter vereinfacht.

Unter einem Vorratsbehälter für Reinigungsmittel ist dabei insbesondere eine Kartusche zu verstehen, die als Einwegkartusche, insbesondere mit einer Vorratsfüllung oder einer Lebensdauerfüllung, oder als Mehrwegkartusche oder Nachfüllkartusche, ausgebildet sein kann. Insbesondere ist ein Vorratsbehälter für Reinigungsmittel dann als solcher zu verstehen, wenn er geeignet ist, ein Reinigungs- und/oder Entkalkungsmittel für mehrere Reinigungsvorgänge eines Kaffeeautomaten zu bevorraten.

Unter einem Reinigungsmittel ist dabei insbesondere jedes Mittel zu verstehen, das zu einem Vermindern von pflanzlichen, öligen, eiweißhaltigen oder fettigen Anhaftungen im Strömungsleitungssystem, insbesondere innerhalb einer Brüheinrichtung oder in einem Milchsystem, beitragen kann, oder das bei einem Reinigen auch schützend auf Teile des Strömungsleitungssystems einwirkt, z. B. auf Dichtungen oder metallische Bestandteile, wie beispielsweise ein Pflegemittel. Unter einem Reinigungsmittel ist dabei jedoch insbesondere auch ein Entkalkungsmittel zu verstehen, das zu einem Vermindern von Kalkanhaftungen im Strömungsleitungssystem, insbesondere innerhalb einer Heizeinrichtung, beitragen kann.

Unter gegenüberliegenden Seiten des Gehäuses sollen hier, insbesondere im Fall der Stirnseite und der ihr gegenüberliegenden Rückseite, nicht nur Seiten angesehen werden, deren Flächennormalen strikt parallel verlaufen, sondern mehr die Seiten, die einer Gehäusefläche gegenüberliegen, insbesondere selbst dann, wenn die Flächennormalen z.B. in einem Winkel von bis zu 45° zueinanderstehen, oder die Flächen unebene Bereiche einschließen.

Bei einer vorteilhaften Weiterbildung der erfindungsgemäßen Lösung verläuft ein Griffbereich für eine Handhabung des Vorratsbehälters beim Herstellen und/oder Trennen der Verbindung mit der Reinigungsvorrichtung entlang mindestens zweier der Kanten und/oder erstreckt sich auf Seitenflächen des Gehäuses, die an mindestens zwei der Kanten stoßen. Dadurch ist selbst für technisch weniger versierte Bedienpersonen eindeutig und intuitiv erkennbar, dass eine Drehbewegung und weiter die Kenntnis über eine richtige Drehbewegung zu einem Lösen und Entnehmen des Vorratsbehälters nicht erforderlich ist. Vielmehr ist sofort erkennbar, dass zum Lösen der Verbindung (oder zu deren Herstellen) einzig eine Translatorische Bewegung, mit ggf. zusätzlich einer vertikalen Komponente, nötig ist. Daher ist die Handhabung des Vorratsbehälters weiter vereinfacht. Durch eine Erstreckung auf die Seitenflächen wird ein Umgreifen erleichtert und die Handhabung dadurch zusätzlich verbessert.

Bei einer weiteren vorteilhaften Weiterbildung der erfindungsgemäßen Lösung umfasst der Anschluss einen Anschlussstutzen. Dadurch ist die Richtung der Handhabung des Vorratsbehälters auch durch die Formgebung des Anschlussstutzens bestimmt. Durch die die Anordnung der Kanten der Stirnseite ist der Griffbereich besonders vorteilhaft auf die durch den Anschlussstutzen bestimmte Richtung der Handhabung abgestimmt. Dies ermöglicht eine noch intuitivere Handhabung des Vorratsbehälters.

Bei einer weiteren vorteilhaften Weiterbildung der erfindungsgemäßen Lösung ist der Anschluss vollständig durch einen einzigen Anschlussstutzen gebildet. Da Anschlussstutzen üblicherweise in Dichtungen eintauchen, die dann jedoch auch eine Haltekraft ausüben, ermöglicht es die Weiterbildung mit einem einzigen Anschlussstutzen diese Haltekraft auf ein Minimum zu beschränken. Dadurch kann erreicht werden, dass bei einem Entnehmen des Vorratsbehälters nur eine minimale Haltekraft überwunden werden muss. Die Handhabung des Vorratsbehälters wird dadurch weiter erleichtert.

Bei einer weiteren vorteilhaften Weiterbildung der erfindungsgemäßen Lösung weist das Gehäuse zwischen der Stirnseite und der Rückseite ein Haltemittel auf, das eingerichtet ist, den Vorratsbehälter in der Verbindung mit der Reinigungsvorrichtung des Strömungsleitungssystems des Kaffeeautomaten festzulegen. Dadurch kann der Vorratsbehälter nicht nur definiert in einer Verbindung, z.B. in einer Verbindung mit einer Reinigungsvorrichtung eines Strömungsleitungssystems eines Kaffeeautomaten, gehalten werden. Vielmehr wird dadurch auch eine haptische Rückmeldung an eine Bedienperson ermöglicht, dass der Vorratsbehälter vollständig in die Verbindung eingebracht ist, d.h. richtig eingesetzt wurde. Dies ermöglicht nicht nur einen sicheren Betrieb, sondern zusätzlich auch eine besonders intuitive Handhabung des Vorratsbehälters.

Der Griffbereich kann sich durch eine Oberflächenstruktur, Einrahmung, Farbe und/oder Gestaltung von der Stirnseite und/oder der Rückseite unterscheiden. Dadurch kann der Griffbereich einerseits besonders auffällig gestaltet sein und dadurch von Bedienpersonen leicht wahrgenommen werden.

Bei einer weiteren vorteilhaften Weiterbildung der erfindungsgemäßen Lösung weist der Griffbereich die gleiche Oberflächenstruktur auf, wie Stirnseite und/oder die Rückseite. Dadurch kann der Griffbereich einerseits besonders unauffällig gestaltet sein. Andererseits wird der Griffbereich dadurch von Bedienpersonen nicht so leicht als zu klein oder zu groß wahrgenommen, weil ein Übergang dadurch fließend gestaltet werden kann. Dies kann sich positiv auf die Wahrnehmung der Handhabung des Vorratsbehälters auswirken.

Bei einer weiteren vorteilhaften Weiterbildung der erfindungsgemäßen Lösung verlaufen zwei entlang der Stirnseite gegenüberliegende der Kanten zueinander parallel, und verlaufen zwei der Kanten zueinander in einen Winkel von kleiner/gleich 90°, und verlaufen zwei der Kanten zueinander in einen Winkel von größer/gleich 90°. Dadurch kann einerseits ein sicherer Stand des Vorratsbehälters auf eine Fläche sehr einfach erreicht werden und andererseits in einem Gehäuse mit vertikalen Wänden an einem Ende der Vorderseite, bevorzug unten bzw. auf der Höhe des Anschlusses und/oder des Haltemittels, sehr einfach mehr Platz für ein Greifen des Vorratsbehälters ermöglicht werden. Dies ermöglich ein intuitives Greifen des Vorratsbehälters an der wirksamsten Stelle und daher eine weiter erleichtere und intuitive Handhabung.

Bei einer weiteren vorteilhaften Weiterbildung der erfindungsgemäßen Lösung umfasst der Vorratsbehälter ein wasserlösliches Reinigungs- und/oder Entkalkungsmittel. Dadurch kann die Konzentration des bevorrateten Mittels maximiert sein und so das Gewicht des Vorratsbehälters, in Bezug auf eine definierte Standzeit, minimiert sein. Dies ermöglicht eine erleichterte Handhabung des Vorratsbehälters.

Bei einer weiteren vorteilhaften Weiterbildung der erfindungsgemäßen Lösung sind zumindest zwei der Kanten der Stirnseite abgerundet. Dadurch wird nicht nur das Greifen des Vorratsbehälters erleichtert, sondern auch für eine Bedienperson besonders angenehm gestaltet und zusätzlich kann bei einem Einsetzen und/oder Entnehmen in/aus ein Gehäuse mit vertikalen Wänden der vorhandene Platz zum Greifen maximal ausgenutzt werden. Dadurch wird die Handhabung des Vorratsbehälters zusätzlich erleichtert.

Die genannte Aufgabe wird auch durch einen Kaffeeautomaten mit einem Strömungsleitungssystem und einer Reinigungsvorrichtung gelöst, bei dem die Reinigungsvorrichtung mindestens einen erfindungsgemäßen Vorratsbehälter aufweist, und/oder eingerichtet ist, einen erfindungsgemäßen Vorratsbehälter aufzunehmen. Da bei Kaffeeautomaten eine Reinigung häufig erforderlich ist, kommen die genannten Vorteile hier in besonders hohem Maße zum Tragen und beeinflussen daher die Wahrnehmung der Handhabung und die sogenannten User Experience, kurz UX, des gesamten Kaffeeautomaten positiv.

Unter einem Kaffeeautomaten ist dabei insbesondere jeder Automat zu verstehen, mit dem Kaffeegetränke zubereitet werden können. Besonders bevorzugt sind darunter Kaffeevollautomaten mit Mahlwerken zu verstehen, die vollautomatisch verschiedene Kaffeegetränke zubereiten können und bei denen daher eine noch häufigere Reinigung erforderlich sein kann und daher die Handhabung des gesamten Kaffeevollautomaten und die UX noch stärker positiv beeinflusst wird.

Weitere Vorteile und vorteilhafte Ausgestaltungen ergeben sich aus den im Folgenden in Verbindung mit den Figuren 1 bis 4 beschriebenen Ausführungsformen. Es zeigen:
- Figur 1: ein schematisch dargestelltes Ausführungsbeispiel eines erfindungsgemäßen Vorratsbehälters in perspektivischer Seitenansicht/Rückansicht,
- Figur 2: ein Ausführungsbeispiel des Vorratsbehälters aus Figur 1 in perspektivischer Vorderansicht/Seitenansicht,
- Figur 3: ein Ausführungsbeispiel des Vorratsbehälters aus Figur 1 in der Seitenansicht, und
- Figur 4: ein schematisch dargestelltes Ausführungsbeispiel eines erfindungsgemäßen Kaffeeautomaten mit einem erfindungsgemäßen Vorratsbehälter in perspektivischer Seitenansicht/Vorderansicht.

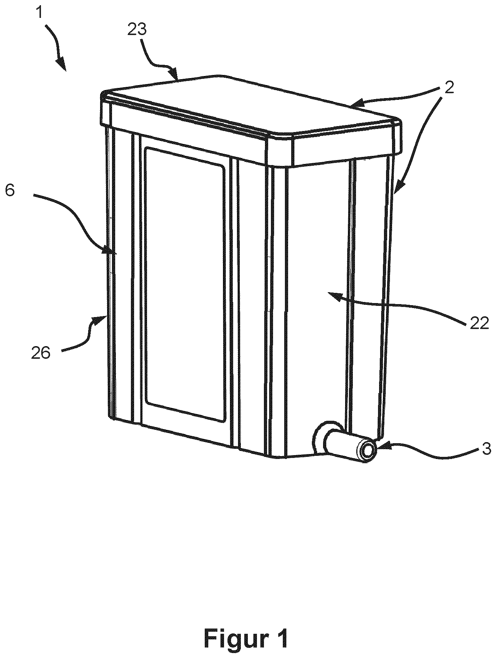

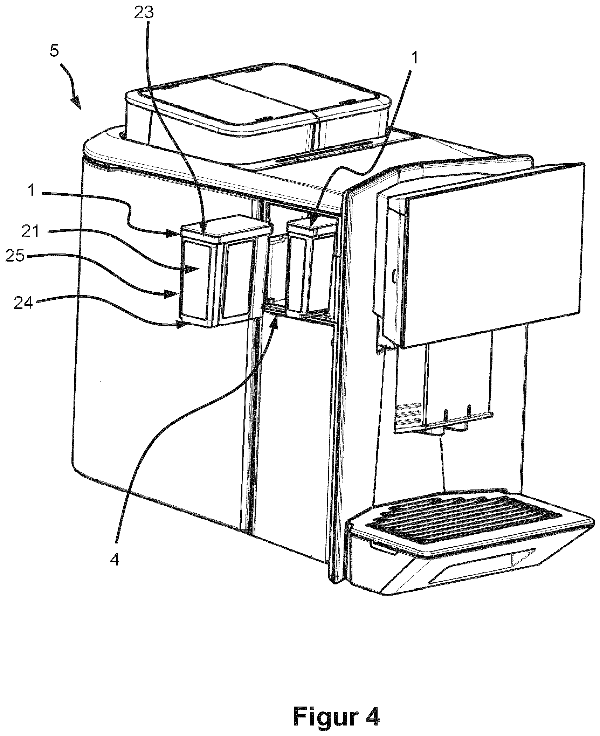

In Figur 1 ist ein schematisch dargestelltes Ausführungsbeispiel eines erfindungsgemäßen Vorratsbehälters 1 in perspektivischer Rückansicht dargestellt. Sie zeigt einen Vorratsbehälter 1 für Reinigungsmittel, mit einem Gehäuse 2 und mit einem Anschluss 3 für eine Verbindung mit einer Reinigungsvorrichtung 4 eines Strömungsleitungssystems eines Kaffeeautomaten 5, der erst in Figur 4 erkennbar ist. Das Gehäuse 2 weist eine in Figur 1 nicht erkennbare Stirnseite 21 auf, wobei der Anschluss 3 an einer der Stirnseite 21 gegenüberliegenden Rückseite 22 des Gehäuses 2 angeordnet ist.

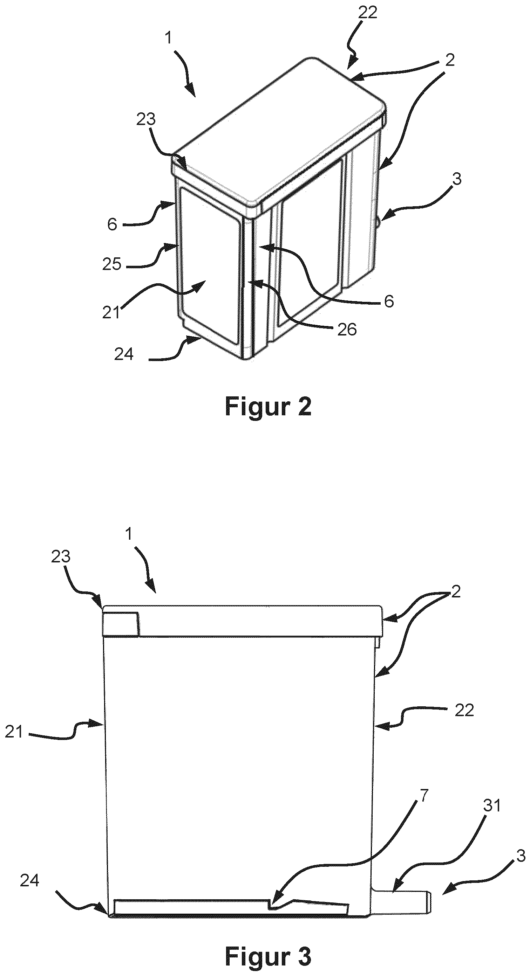

Die Stirnseite 21 ist in Figur 2 ersichtlich und ist durch zumindest drei, im vorliegenden Beispiel vier Kanten 23, 24, 25, 26 begrenzt. Dabei verlaufen zwei sich entlang der Stirnseite 21 gegenüberliegende, die obere Kante 23 und die untere Kante 24, zueinander parallel. Zudem verlaufen zwei, nämlich hier die obere Kante 23 und die linke Kante 25 zueinander in einen Winkel von kleiner 90°. Zudem verlaufen hier die obere Kante 23 und die rechte Kante 26 zueinander in einen Winkel von kleiner 90°. Die Winkel zwischen der unteren Kante 24 und der linken Kante 25 sowie der rechten Kante 26 sind beide größer als 90°. Alternativ (in der Zeichnung nicht ersichtlich) könnte z.B. auch die untere Kante 24 gegenüber der oberen Kante 23 geneigt sein, sodass die Winkel zwischen der oberen Katen 24 und der linken Kante 25 sowie der rechten Kante 26 je kleiner 90° sind und die Winkel zwischen der unteren Kante 24 und der der linken Kante 25 sowie der rechten Kante 26 unterschiedlich sein und einer dieser beiden Winkel ebenfalls kleiner 90° sein und der andere dieser beiden Winkel größer 90° sein.

Ein Griffbereich 6 für eine Handhabung des Vorratsbehälters 1 beim Herstellen und/oder Trennen der Verbindung mit der (erst in Figur 4 dargestellten) Reinigungsvorrichtung 4 verläuft entlang der linken Kanten 25 und der rechten Kante 26 verläuft und erstreckt sich je auf Seitenflächen des Gehäuses 2, die an die linke Kante 25 bzw. die rechte Kante 26 stoßen. Wie in den Figuren 1 und 2 erkennbar, sind zwei, nämlich die linke Kante 25 und die rechte Kante 26 der Stirnseite 21 abgerundet. Der Griffbereich 6 weist die gleiche Oberflächenstruktur auf, wie Stirnseite 21 und die Rückseite 22 und ist daher optisch in den Figuren nicht trennscharf zu erkennen. Er ergibt sich aus der Gestaltung des Vorratsbehälters 1 jedoch intuitiv.

Wie z.B. in Figur 2 ersichtlich, können die Seitenflächen des Gehäuses 2 vertikale Nuten aufweisen, die z.B. als Ablaufrinnen zur Ableitung von Flüssigkeit aus einem Überlauf des Vorratsbehälters 1 ausgebildet sind. Dergleichen soll hier nicht als Begrenzung einer Fläche oder Seite verstanden werden, insbesondere nicht als eine Begrenzung einer Seitenfläche, einer Stirnseite 21 oder einer Rückseite 22. Sie könne jedoch dazu dienen, die bzw. eine Erstreckung des Griffbereichs 6 unauffällig einzugrenzen.

Wie in Figur 3 erkennbar umfasst der Vorratsbehälter 1 als Anschluss 3 einen Anschlussstutzen 31. Der Anschluss 3 wird im vorliegenden Beispiel vollständig durch einen einzigen Anschlussstutzen 31 gebildet. Ebenfalls ist in Figur 3 erkennbar, dass das Gehäuse 2 zwischen der Stirnseite 21 und der Rückseite 22 ein Haltemittel 7 aufweist, das eingerichtet ist, den Vorratsbehälter 1 in der Verbindung mit der Reinigungsvorrichtung 4 des Strömungsleitungssystems des Kaffeeautomaten 5 festzulegen, wie es in Figur 4 erkennbar ist.

In Figur 4 ist ein Kaffeeautomat 5 dargestellt, der ein Strömungsleitungssystem (nicht dargestellt) und eine Reinigungsvorrichtung 4 aufweist. Die Reinigungsvorrichtung 4 weist hier zwei Vorratsbehälter 1 auf, wobei der linke und etwas größere der beiden Vorratsbehälter 1 zum Nachfüllen oder Austauschen entnommen dargestellt ist. Hingegen ist der rechte und etwas kleinere der beiden Vorratsbehälter 1 eingesetzt und durch das Haltemittel 7 in der Verbindung mit der Reinigungsvorrichtung 4 des Strömungsleitungssystems des Kaffeeautomaten 5 festgelegt dargestellt. Auch wenn es aus den Figuren nicht ersichtlich ist, umfasst der linke der beiden dargestellten Vorratsbehälter 1 ein wasserlösliches Entkalkungsmittel und umfasst der rechte der beiden dargestellten Vorratsbehälter 1 ein wasserlösliches Reinigungsmittel.

Durch die erfindungsgemäße Ausbildung der Vorratsbehälter 1 ist auch für technisch weniger versierte Bedienpersonen intuitiv erkennbar, dass eine Drehbewegung oder die Kenntnis einer zum Lösen der Vorratsbehälter 1 erforderlichen Drehrichtung nicht nötig ist. Durch die Anordnung der Kanten 23, 24, 25 und 26, insbesondere die der linken Kante 25 und der rechten Kante 26 kann eine Bedienperson den Vorratsbehälter 1 intuitiv am Griffbereich 6 angreifen und erkennen, dass eine translatorische Bewegung erforderlich ist. Somit wird eine intuitive und insbesondere erleichterte Handhabung ermöglicht.

Die im Ausführungsbeispiel dargestellten Bestandteile wie z. B. der Vorratsbehälter 1 und der Griffbereich 6 sowie deren Größenverhältnisse zueinander sind grundsätzlich nicht als maßstabsgerecht anzusehen. Vielmehr können einzelne Elemente wie beispielsweise der Fluidanschluss 3 und das Haltemittel 7 zur besseren Darstellbarkeit und/oder zum besseren Verständnis übertrieben dick oder groß dimensioniert dargestellt sein. Die Erläuterung des erfindungsgemäßen Vorratsbehälters 1 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst nicht explizit in den Patentansprüchen oder den Ausführungsbeispielen angegeben ist.

### BEZUGSZEICHENLISTE

- 1: Vorratsbehälter
- 2: Gehäuse
- 21: Stirnseite
- 22: Rückseite
- 23: Kante, oben
- 24: Kante, unten
- 25: Kante, links
- 26: Kante, rechts
- 3: Anschluss
- 31: Anschlussstutzen
- 4: Reinigungsvorrichtung
- 5: Kaffeeautomat
- 6: Griffbereich
- 7: Haltemittel

## Patentansprüche

1. Vorratsbehälter (1) für Reinigungsmittel, mit einem Gehäuse (2) und mit einem Anschluss (3) für eine Verbindung mit einer Reinigungsvorrichtung (4) eines Strömungsleitungssystems eines Kaffeeautomaten (5), wobei das Gehäuse (2) eine Stirnseite (21) aufweiset und wobei der Anschluss (3) an einer der Stirnseite (21) gegenüberliegenden Rückseite (22) des Gehäuses (2) angeordnet ist, **dadurch gekennzeichnet, dass** die Stirnseite (21) durch zumindest drei Kanten (23, 24, 25, 26) begrenzt ist, und dass zwei sich entlang der Stirnseite (21) gegenüberliegende der Kanten (23, 24, 25, 26) zueinander parallel verlaufen und/oder dass zwei der Kanten (23, 24, 25, 26) zueinander in einen Winkel von kleiner/gleich 90° verlaufen.

2. Vorratsbehälter (1) nach Anspruch 1, **dadurch gekennzeichnet, dass** ein Griffbereich (6), für eine Handhabung des Vorratsbehälters (1) beim Herstellen und/oder Trennen der Verbindung mit der Reinigungsvorrichtung (4), entlang mindestens zwei der Kanten (23, 24, 25, 26) verläuft und/oder sich auf Seitenflächen des Gehäuses (2) erstreckt, die an mindestens zwei der Kanten (23, 24, 25, 26) stoßen.

3. Vorratsbehälter (1) nach Anspruch 1 oder 2, **dadurch gekennzeichnet, dass** der Anschluss (3) einen Anschlussstutzen (31) umfasst.

4. Vorratsbehälter (1) nach einem der Ansprüche 1 bis 3, **dadurch gekennzeichnet, dass** der Anschluss (3) vollständig durch einen einzigen Anschlussstutzen (31) gebildet ist.

5. Vorratsbehälter (1) nach einem der Ansprüche 1 bis 4, **dadurch gekennzeichnet, dass** das Gehäuse (2) zwischen der Stirnseite (21) und der Rückseite (22) ein Haltemittel (7) aufweist, das eingerichtet ist, den Vorratsbehälter (1) in der Verbindung mit der Reinigungsvorrichtung (4) des Strömungsleitungssystems des Kaffeeautomaten (5) festzulegen.

6. Vorratsbehälter (1) nach einem der Ansprüche 2 bis 5, **dadurch gekennzeichnet, dass** der Griffbereich (6) die gleiche Oberflächenstruktur aufweist, wie Stirnseite (21) und/oder die Rückseite (22).

7. Vorratsbehälter (1) nach einem der Ansprüche 1 bis 6, **dadurch gekennzeichnet, dass** zwei entlang der Stirnseite (21) gegenüberliegende der Kanten (23, 24, 25, 26) zueinander parallel verlaufen, dass zwei der Kanten (23, 24, 25, 26) zueinander in einen Winkel von kleiner/gleich 90° verlaufen, und dass zwei der Kanten (23, 24, 25, 26) zueinander in einen Winkel von größer/gleich 90° verlaufen.

8. Vorratsbehälter (1) nach einem der Ansprüche 1 bis 7, **dadurch gekennzeichnet, dass** er ein wasserlösliches Reinigungs- und/oder Entkalkungsmittel umfasst.

9. Vorratsbehälter (1) nach einem der Ansprüche 1 bis 8, **dadurch gekennzeichnet, dass** zumindest zwei der Kanten (23, 24, 25, 26) der Stirnseite (12) abgerundet sind.

10. Kaffeeautomat (5) mit einem Strömungsleitungssystem und einer Reinigungsvorrichtung (4), **dadurch gekennzeichnet, dass** die Reinigungsvorrichtung (4) mindestens einen Vorratsbehälter (1) nach einem der Ansprüche 1 bis 9 aufweist.
